# EUROPEAN PATENT APPLICATION

(11) **EP 4 746 474 A1**
(43) Date of publication of application: **20.05.2026**
(21) Application number: 23944754.3
(22) Date of filing: 13.07.2023
(51) Int. Cl.: H04W 12/0431

(54) **INFORMATION PROCESSING METHOD, DEVICE, COMMUNICATION SYSTEM, AND STORAGE MEDIUM**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Stöckeler, Ferdinand
(86) International application number: PCT/CN2023/107325
(87) International publication number: WO 2025/010741

(57) **Abstract**

Embodiments of the present disclosure provide an information processing method, a device, a communication system, and a storage medium. The information processing method comprises: a first device sends a first signal to a second device, wherein the first signal is used for exciting the second device to send a second signal, and security protection is performed on at least one of the first signal and the second signal by using security information. In this way, the security of communication between the first device and the second device can be improved.

## Description

### TECHNICAL FIELD

The present disclosure relates to the field of communication technology, and specifically to an information processing method, a device, a communication system, and a storage medium.

### BACKGROUND

In the field of communication technology, some Internet of Things (IoT) devices can collect ambient energy for power supply; for example, these IoT devices can generally be powered by collecting radio waves, light, motion, heat, or any other suitable power sources.

### SUMMARY

Embodiments of the present disclosure need to solve a security problem of transmission between devices.

Embodiments of the present disclosure provide an information processing method, including:
sending, by a first device, a first signal to a second device, in which the first signal is configured to stimulate the second device to send a second signal, and a security protection is performed on at least one of the first signal or the second signal using security information.

According to a second aspect of embodiments of the present disclosure, an information processing method is provided, including:
receiving, by a second device, a first signal sent by a first device; and
sending a second signal based on the first signal;
in which a security protection is performed on at least one of the first signal or the second signal using security information.

According to a third aspect of embodiments of the present disclosure, an information processing method is provided, including:
receiving, by a third device, a first request sent by a first device, in which the first request is configured to request security information, the security information is used for the first device to perform a security protection and/or a security verification on a first signal, and/or the security information is used for a second device to perform a security protection and/or a security verification on a second signal, the second signal is determined based on the first signal.

According to a fourth aspect of embodiments of the present disclosure, an information processing method is provided, including:
providing, by a fourth device, security information to a first device and/or a second device, in which the security information is used for the first device to perform a security protection and/or a security verification on at least one of a first signal, and/or the security information is used for the second device to perform a security protection and/or a security verification on at least one of a second signal, the second signal is determined based on the first signal.

According to a fifth aspect of embodiments of the present disclosure, an information processing method is provided, including:
sending, by a first device, a first signal to a second device; and
sending, by the second device, a second signal to the first device based on the first signal;
in which a security protection is performed on at least one of the first signal or the second signal using security information.

According to a sixth aspect of embodiments of the present disclosure, a first device is provided, including:
a first transceiver module, configured to send a first signal to a second device, in which the first signal is configured to stimulate the second device to send a second signal, and a security protection is performed on at least one of the first signal or the second signal using security information.

According to a seventh aspect of embodiments of the present disclosure, a second device is provided, including:
a second transceiver module, configured to receive a first signal sent by a first device; and
send a second signal based on the first signal;
in which a security protection is performed on at least one of the first signal or the second signal using security information.

According to an eighth aspect of embodiments of the present disclosure, a third device is provided, including:
a third transceiver module, configured to receive a first request sent by a first device, in which the first request is configured to request security information, the security information is used for the first device to perform a security protection and/or a security verification on a first signal, and/or the security information is used for a second device to perform a security protection and/or a security verification on a second signal, the second signal is determined based on the first signal.

According to a ninth aspect of embodiments of the present disclosure, a fourth device is provided, including:
a fourth transceiver module, configured to send security information to a first device and/or a second device, in which the security information is used for the first device to perform a security protection and/or a security verification on at least one of a first signal, and/or the security information is used for the second device to perform a security protection and/or a security verification on at least one of a second signal, the second signal is determined based on the first signal.

According to a tenth aspect of embodiments of the present disclosure, a first device is provided, including: one or more processors; in which the first device is configured to perform the information processing method according to alternative implementations of the first aspect.

According to an eleventh aspect of embodiments of the present disclosure, a second device is provided, including: one or more processors; in which the second device is configured to perform the information processing method according to alternative implementations of the first aspect.

According to a twelfth aspect of embodiments of the present disclosure, a third device is provided, including: one or more processors; in which the third device is configured to perform the information processing method according to alternative implementations of the first aspect.

According to a thirteenth aspect of embodiments of the present disclosure, a fourth device is provided, including: one or more processors; in which the fourth device is configured to perform the information processing method according to alternative implementations of the first aspect.

According to a fourteenth aspect of embodiments of the present disclosure, a communication system is provided, including: a first device, a second device, a third device and a fourth device. The first device is configured to perform the method described in alternative implementations of the first aspect, the second device is configured to perform the method described in alternative implementations of the second aspect, the second device is configured to perform the method described in alternative implementations of the third aspect, and the fourth device is configured to perform the method described in alternative implementations of the fourth aspect.

According to the fifteenth aspect of embodiments of the present disclosure, a storage medium is provided. The storage medium stores instructions. When the instructions are executed on a communication device, the communication device is caused to perform the method described in the first aspect, the second aspect, the third aspect, the fourth aspect, the fifth aspect, or alternative implementations of the first aspect, the second aspect, the third aspect, the fourth aspect and the fifth aspect.

Embodiments of the present disclosure can improve the security of signal transmission between devices.

### BRIEF DESCRIPTION OF THE DRAWINGS

In order to more clearly illustrate the technical solutions in embodiments of the present disclosure, the drawings required for describing embodiments are introduced below. The following drawings are only some embodiments of the present disclosure and do not impose specific limitations on the protection scope of the present disclosure.
FIG. 1A is a schematic diagram of an information processing system according to an embodiment of the present disclosure.
FIG. 1B is a schematic diagram of a network topology architecture according to an embodiment of the present disclosure.
FIG. 1C is a schematic diagram of a network topology architecture according to an embodiment of the present disclosure.
FIG. 1D is a schematic diagram of a network topology architecture according to an embodiment of the present disclosure.
FIG. 1E is a schematic diagram of a network topology architecture according to an embodiment of the present disclosure.
FIG. 2 is a flowchart of an information processing method according to an embodiment of the present disclosure.
FIG. 3A is a flowchart of an information processing method according to an embodiment of the present disclosure.
FIG. 3B is a flowchart of an information processing method according to an embodiment of the present disclosure.
FIG. 4A is a flowchart of an information processing method according to an embodiment of the present disclosure.
FIG. 4B is a flowchart of an information processing method according to an embodiment of the present disclosure.
FIG. 5A is a flowchart of an information processing method according to an embodiment of the present disclosure.
FIG. 5B is a flowchart of an information processing method according to an embodiment of the present disclosure.
FIG. 6A is a flowchart of an information processing method according to an embodiment of the present disclosure.
FIG. 6B is a flowchart of an information processing method according to an embodiment of the present disclosure.
FIG. 7 is a flowchart of an information processing method according to an embodiment of the present disclosure.
FIG. 8 is a flowchart of an information processing method according to an embodiment of the present disclosure.
FIG. 9A is a block diagram of a first device according to an embodiment of the present disclosure.
FIG. 9B is a block diagram of a second device according to an embodiment of the present disclosure.
FIG. 9C is a block diagram of a third device according to an embodiment of the present disclosure.
FIG. 9D is a block diagram of a fourth device according to an embodiment of the present disclosure.
FIG. 10A is a block diagram of a communication device according to an embodiment of the present disclosure.
FIG. 10B is a block diagram of a chip according to an embodiment of the present disclosure.

### DETAILED DESCRIPTION

Embodiments of the present disclosure provide an information processing method, a device, a communication system, and a storage medium.

According to a first aspect of embodiments of the present disclosure, an information processing method is provided, including:
sending, by a first device, a first signal to a second device, in which the first signal is configured to stimulate the second device to send a second signal, and a security protection is performed on at least one of the first signal or the second signal using security information.

In the above embodiment, the security information may be used to perform the security protection on at least one of the first signal or the second signal, thereby improving the security of communication between the first device and the second device.

In combination with some embodiments of the first aspect, in some embodiments, the security information includes:
key information, in which the key information is configured for at least one of: a confidentiality protection or an integrity protection;
password information, in which the password information is configured for encoding and/or decoding; or
security algorithm information, in which the security algorithm information is configured to indicate at least one of: an algorithm used for a confidentiality protection or an algorithm used for an integrity protection.

In the above embodiment, the confidentiality protection and/or integrity protection of the first signal and/or the second signal may be performed through the key information, or the first signal and/or the second signal may be encoded through the password information. In this way, the security protection of the first signal and/or the second signal may be achieved through various security information, which can adapt to more scenarios.

In combination with some embodiments of the first aspect, in some embodiments, the first signal includes first information for which the security protection is performed using the security information, and the method further includes: receiving the second signal sent by the second device, in which the second signal includes second information for which the security protection is performed using the security information, and the second information is determined based on the first information.

In the above embodiment, both the first signal and the second signal may be encrypted using the security information, thereby achieving secure communication in bidirectional transmission between the first device and the second device.

In combination with some embodiments of the first aspect, in some embodiments, the first signal comprises a first identifier, and the first identifier is configured to identify the second device; the second signal is sent by the second device in a case of determining that the first identifier is the same as a second identifier stored in the second device.

In the above embodiment, the second device may send the first signal for which the security protection is performed using the security information only when it determines that the first device requests for its own data. On one hand, the security of communication between the first device and the second device can be further improved. On the other hand, there is no need for the second device to protect the transmission of the second signal as soon as it receives the first signal, thereby saving system resources.

In combination with some embodiments of the first aspect, in some embodiments, the method includes one of:
performing an integrity verification and/or a decryption on the second signal based on the key information in the security information to obtain the second information; or
decoding the second signal based on the password information in the security information to obtain the second information.

In the above embodiment, the integrity verification and/or decryption may be performed on the second signal, or the second signal may be decoded based on the same security information, so that accurate second information may be obtained, thereby achieving secure communication between the first device and the second device.

In combination with some embodiments of the first aspect, in some embodiments, the security protection is not performed on the first signal using the security information, and the method further includes: receiving the second signal sent by the second device, in which the second signal includes third information for which the security protection is performed using the security information.

In the above embodiment, the security protection is not performed on the first signal or the security protection is performed on the second signal, thereby also realizing secure communication when the second device performs transmission with the first device. In addition, since the first signal is a stimulating signal, it may adapt to a scenario of not carrying requirements such as inquiries or requests, and in this scenario, not performing the security protection does not affect secure communication between the first device and the second device.

In combination with some embodiments of the first aspect, in some embodiments, the method includes one of:
performing an integrity verification and/or a decryption on the second signal based on the key information in the security information to obtain the third information; or
decoding the second signal based on the password information in the security information to obtain the third information.

In the above embodiment, the integrity verification and/or decryption may be performed on the second signal, or the second signal may be decoded based on the same security information, so that accurate third information may be obtained to achieve secure communication between the first device and the second device.

In combination with some embodiments of the first aspect, in some embodiments, the method further includes: sending a first request to a third device, in which the first request is configured to request the security information.

In the above embodiment, the first device may send a request to the third device to facilitate requesting the security information required by the first device.

In combination with some embodiments of the first aspect, in some embodiments, the first request includes at least one of:
a third identifier, configured to indicate the first device;
a first identifier, configured to indicate the second device; or
a service identifier, configured to indicate a service of the second device.

In the above embodiment, by carrying the third identifier, the third device may be informed which device needs to request the security information, which may be used to authenticate the first device; and/or, by carrying the first identifier, the third device may be informed which security information the first device needs to request; and/or, by carrying the service identifier, the third device may be informed the service whose security information the first device needs to request.

In combination with some embodiments of the first aspect, in some embodiments, the method further includes: receiving a first response sent by the third device, in which the first response includes the security information, and the first response is sent by the third device in a case of determining that the first device is authorized to perform secure communication with the second device.

In the above embodiment, after the first device passes the authentication, the security information sent by the third device may be obtained, so that the first device can perform the security protection on the first signal based on the security information.

In combination with some embodiments of the first aspect, in some embodiments, the method further includes one of:
pre-configuring the security information; or
obtaining the security information from a fourth device.

In the above embodiment, the first device may obtain the security information in a preconfigured manner, or may obtain the security information from the fourth device, that is, multiple ways of obtaining the security information may be provided, thereby adapting to more scenarios.

In combination with some embodiments of the first aspect, in some embodiments, the method further includes at least one of:
storing a first identifier of at least one second device and security information corresponding to the first identifier in an association manner; or
storing at least one service identifier and security information corresponding to the at least one service identifier in an association manner.

In the above embodiment, it may be beneficial for the first device to obtain the security information corresponding to the second device from the information stored in itself to perform the security protection on the first signal, and/or to obtain the security information corresponding to the service of the second device to perform the security protection on the first signal subsequently, thereby facilitating the subsequent security protection of the first signal by the first device.

In combination with some embodiments of the first aspect, in some embodiments, the first device includes at least one of: a base station, an assistance node, an intermediate node, an integrated access and backhaul integrated (IAB), or a user equipment (UE);
and/or the second device includes at least one of: an ambient Internet of Things (IoT) device;
and/or the third device includes at least one of: a policy control function (PCF), a direct discovery name management function (DDNMF), a ProSe key management function (PKMF), or a first network element; in which the first network element is configured to manage an ambient Internet of Things (IoT) device;
and/or the fourth device includes at least one of: an application server or an operator device.

In the above embodiments, various devices such as the base station, the assistance node, the intermediate node, the IAB or the UE may be used as the first devices to perform the secure communication with ambient IoT devices; the security information of the application server or operator device may be forwarded to the ambient IoT device and/or the first device such as the base station through various core network devices, such as the PCF, the DDNMF, the PKMF or the first network element; the security information may be provided to the first device and/or the first device as well as authentication of the first device may be performed through various third devices such as the application server and the operator device.

According to a second aspect of embodiments of the present disclosure, an information processing method is provided, including:
receiving, by a second device, a first signal sent by a first device; and
sending a second signal based on the first signal;
in which a security protection is performed on at least one of the first signal or the second signal using security information.

In combination with some embodiments of the second aspect, in some embodiments, the security information includes at least one of:
key information, in which the key information is configured for at least one of: a confidentiality protection or an integrity protection;
password information, in which the password information is configured for encoding and/or decoding; or
security algorithm information, in which the security algorithm information is configured to indicate at least one of: an algorithm used for a confidentiality protection or an algorithm used for an integrity protection.

In combination with some embodiments of the second aspect, in some embodiments, the first signal further first information for which the security protection is performed using the security information, the method includes one of:
performing an integrity verification and/or a decryption on the first signal based on the key information in the security information to obtain the first information; or
decoding the first signal based on the password information in the security information to obtain the first information.

In combination with some embodiments of the second aspect, in some embodiments, the method further includes:
determining second information based on the first information; and
sending the second signal to the first device, in which the second signal includes the second information for which the security protection is performed using the security information.

In combination with some embodiments of the second aspect, in some embodiments, the first signal includes a first identifier, and the first identifier is configured to identify the second device; and sending the second signal to the first device includes: sending the second signal to the first device based on the first identifier being the same as a second identifier stored in the second device.

In combination with some embodiments of the second aspect, in some embodiments, the security protection is not performed on the first signal using the security information, and the method includes: sending the second signal to the first device, in which the second signal includes third information for which the security protection is performed using the security information.

In combination with some embodiments of the second aspect, in some embodiments, the method further includes one of:
pre-configuring the security information; or
obtaining the security information from a fourth device.

In combination with some embodiments of the second aspect, in some embodiments, the first device includes at least one of: a base station, an assistance node, an intermediate node, an integrated access and backhaul integrated (IAB), or a user equipment (UE);
and/or the second device includes at least one of: an ambient IoT device;
and/or the fourth device includes at least one of: an application server or an operator device.

According to a third aspect of embodiments of the present disclosure, an information processing method is provided, including:
receiving, by a third device, a first request sent by a first device, in which the first request is configured to request security information, the security information is used for the first device to perform a security protection and/or a security verification on a first signal, and/or the security information is used for a second device to perform a security protection and/or a security verification on a second signal, the second signal is determined based on the first signal.

In combination with some embodiments of the third aspect, in some embodiments, the security information includes at least one of:
key information, in which the key information is configured for at least one of: a confidentiality protection or an integrity protection;
password information, in which the password information is configured for encoding and/or decoding; or
security algorithm information, in which the security algorithm information is configured to indicate at least one of: an algorithm used for a confidentiality protection or an algorithm used for an integrity protection.

In combination with some embodiments of the third aspect, in some embodiments, the first request includes at least one of:
a third identifier, configured to indicate the first device;
a first identifier, configured to indicate the second device; or
a service identifier, configured to indicate a service of the second device.

In combination with some embodiments of the third aspect, in some embodiments, the method further includes: sending a second request to a fourth device, in which the second request is configured to request authorization of whether the first device is capable of performing a secure communication with the second device.

In the above embodiment, the second request may be sent to the fourth device through the third device, so as to facilitate the fourth device to authenticate whether the first device can perform the secure communication with the second device.

In combination with some embodiments of the third aspect, in some embodiments, the method further includes: receiving a second response sent by the fourth device, in which the second response includes one of:
first indication information, configured to indicate that the first device is authorized to perform the secure communication with the second device;
second indication information, configured to indicate that the first device is not authorized to perform the secure communication with the second device.

In the above embodiment, the authentication result for the first device from the fourth device may be obtained through the third device.

In combination with some embodiments of the third aspect, in some embodiments, the method further includes: sending a first response to the first device based on the second response including the first indication information, in which the first response includes the security information.

In combination with some embodiments of the third aspect, in some embodiments, the method further includes: in response to determining that the first device is authorized to perform the secure communication with the second device, sending a first response to the first device, in which the first response includes the security information.

In the above embodiment, whether the first device is capable of performing the secure communication with the second device may be authenticated by the third device; and when the authentication is successful, the third device provides the security information to the first device.

In combination with some embodiments of the third aspect, in some embodiments, the method further includes: receiving the security information sent by a fourth device.

In combination with some embodiments of the third aspect, in some embodiments, the first device includes at least one of: a base station, an assistance node, an intermediate node, an integrated access and backhaul integrated (IAB), or a user equipment (UE);
and/or the second device includes at least one of: an ambient IoT device;
and/or the third device includes at least one of: a policy control function (PCF), a direct discovery name management function (DDNMF), a ProSe key management function (PKMF), or a first network element; wherein the first network element is configured to manage an ambient Internet of Things (IoT) device;
and/or the fourth device includes at least one of: an application server or an operator device.

According to a fourth aspect of embodiments of the present disclosure, an information processing method is provided, including:
providing, by a fourth device, security information to a first device and/or a second device, in which the security information is used for the first device to perform a security protection and/or a security verification on at least one of a first signal, and/or the security information is used for the second device to perform a security protection and/or a security verification on at least one of a second signal, the second signal is determined based on the first signal.

**In** combination with some embodiments of the fourth aspect, in some embodiments, the security information includes at least one of:
key information, in which the key information is configured for at least one of: a confidentiality protection and/or an integrity protection;
password information, in which the password information is configured for encoding and/or decoding; or
security algorithm information, in which the security algorithm information is configured to indicate at least one of: an algorithm used for a confidentiality protection or an algorithm used for an integrity protection.

In combination with some embodiments of the fourth aspect, in some embodiments, the method further includes: receiving a second request sent by a third device, in which the second request is configured to request authorization of whether the first device is capable of performing a secure communication with the second device.

In combination with some embodiments of the fourth aspect, in some embodiments, the method further includes:
sending a second response to the third device, in which the second response includes one of:
first indication information, configured to indicate that the first device is authorized to perform the secure communication with the second device;
second indication information, configured to indicate that the first device is not authorized to perform the secure communication with the second device.

According to a fifth aspect of embodiments of the present disclosure, an information processing method is provided, including:
sending, by a first device, a first signal to a second device; and
sending, by the second device, a second signal to the first device based on the first signal;
in which a security protection is performed on at least one of the first signal or the second signal using security information.

In combination with some embodiments of the fifth aspect, in some embodiments, the method includes at least one of:
receiving, by the first device, the security information sent by a fourth device; or
receiving, by the second device, the security information sent by a fourth device.

In combination with some embodiments of the fifth aspect, in some embodiments, the method further includes:
sending, by the first device, a first request to a third device, in which the first request is configured to request the security information;
sending, by the third device, a second request to a fourth device, in which the second request is configured to request authorization for the first device to obtain the security information;
sending, by the fourth device, a second response to the third device, in which the second response includes first indication information for indicating that the first device is authorized to obtain the security information; and
sending, by the third device, a first response to a first network node, in which the first response includes the security information.

According to a sixth aspect of embodiments of the present disclosure, a first device is provided, including:
a first transceiver module, configured to send a first signal to a second device, in which the first signal is configured to stimulate the second device to send a second signal, and a security protection is performed on at least one of the first signal or the second signal using security information.

According to a seventh aspect of embodiments of the present disclosure, a second device is provided, including:
a second transceiver module, configured to receive a first signal sent by a first device, and
to send a second signal based on the first signal;
in which a security protection is performed on at least one of the first signal or the second signal using security information.

According to an eighth aspect of embodiments of the present disclosure, a third device is provided, including:
a third transceiver module, configured to receive a first request sent by a first device, in which the first request is configured to request security information, the security information is used for the first device to perform a security protection and/or a security verification on a first signal, and/or the security information is used for a second device to perform a security protection and/or a security verification on a second signal, the second signal is determined based on the first signal.

According to a ninth aspect of embodiments of the present disclosure, a fourth device is provided, including:
a fourth transceiver module, configured to send security information to a first device and/or a second device, in which the security information is used for the first device to perform a security protection and/or a security verification on at least one of a first signal, and/or the security information is used for the second device to perform a security protection and/or a security verification on at least one of a second signal, the second signal is determined based on the first signal.

According to a tenth aspect of embodiments of the present disclosure, a first device is provided, including: one or more processors. The first device is configured to perform alternative implementations of the first aspect.

According to an eleventh aspect of embodiments of the present disclosure, a second device is provided, including: one or more processors. The second device is configured to perform alternative implementations of the first aspect.

According to a twelfth aspect of embodiments of the present disclosure, a third device is provided, including: one or more processors. The third device is configured to perform alternative implementations of the first aspect.

According to a thirteenth aspect of embodiments of the present disclosure, a fourth device is provided, including: one or more processors. The fourth device is configured to perform alternative implementations of the first aspect.

According to a fourteenth aspect of embodiments of the present disclosure, a communication system is provided, including: a first device, a second device, a third device and a fourth device. The first device is configured to perform the method described in alternative implementations of the first aspect, the second device is configured to perform the method described in alternative implementations of the second aspect, the second device is configured to perform the method described in alternative implementations of the third aspect, the fourth device is configured to perform the method described in alternative implementations of the fourth aspect.

According to a fifteenth aspect of embodiments of the present disclosure, a storage medium for storing instructions is provided. When the instructions are executed on a communication device, the communication device is caused to perform the method described in the first aspect, the second aspect, the third aspect, the fourth aspect, or the fifth aspect, or alternative implementations of the first aspect, the second aspect, the third aspect, the fourth aspect, or the fifth aspect.

According to a sixteenth aspect of embodiments of the present disclosure, a program product is provided. When the program product is executed on a communication device, the communication device is caused to perform the method described in the first aspect, the second aspect, the third aspect, the fourth aspect, or the fifth aspect, or alternative implementations of the first aspect, the second aspect, the third aspect, the fourth aspect, or the fifth aspect.

According to a seventeenth aspect of embodiments of the present disclosure, a computer program is provided. When the computer program is running on a computer, the computer is caused to perform the method described in the first aspect, the second aspect, the third aspect, the fourth aspect, or the fifth aspect, or alternative implementations of the first aspect, the second aspect, the third aspect, the fourth aspect, or the fifth aspect.

According to an eighteenth aspect of embodiments of the present disclosure, a chip or chip system is provided. The chip or chip system includes a processing circuit configured to execute the method described in the first aspect, the second aspect, the third aspect, the fourth aspect, or the fifth aspect, or alternative implementations of the first aspect, the second aspect, the third aspect, the fourth aspect, or the fifth aspect.

It can be understood that the above-mentioned first device, the network device, the communication system, the storage medium, the program product, the computer program, and the chip or chip system are all used to execute the method disclosed in embodiments of the present disclosure. Therefore, for the beneficial effects that can be achieved, reference may be made to the beneficial effects in the corresponding method, which will not be repeated here.

Embodiments of the present disclosure propose an information processing method, a second device, a third device, a fourth device, a communication system, and a storage medium. In some embodiments, the terms such as information processing method, communication method, etc. can be replaced with each other, and the terms such as information processing apparatus, communication apparatus, etc. can be replaced with each other, the terms such as information processing system, communication system, etc. can be replaced with each other.

Embodiments of the present disclosure are not exhaustive, but are only illustrative, and are not intended to be a specific limitation on the protection scope of the present disclosure. In the absence of contradiction, each step in a certain embodiment may be implemented as an independent embodiment, and respective steps may be arbitrarily combined. For example, a solution after removing some steps in a certain embodiment can also be implemented as an independent embodiment, and the order of the steps in a certain embodiment may be arbitrarily exchanged. In addition, optional implementations in a certain embodiment may be arbitrarily combined; in addition, respective embodiments may be arbitrarily combined, for example, some or all steps of different embodiments may be arbitrarily combined, and a certain embodiment may be arbitrarily combined with optional implementations of other embodiments.

In each embodiment of the present disclosure, unless otherwise specified or there is a logical conflict, the terms and/or descriptions between embodiments are consistent and can be referred to each other, and the technical features in different embodiments may be combined to form a new embodiment based on their internal logical relationships.

The terms used in embodiments of the present disclosure are only for the purpose of describing specific embodiments and are not intended to limit the present disclosure.

**In** embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In embodiments of the present disclosure, "plurality" refers to two or more.

In some embodiments, the terms "at least one of", "one or more", "a plurality of", "multiple" etc. may be used interchangeably.

In some embodiments, descriptions such as "at least one of A, B... ", "A and/or B...", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, descriptions such as "A or B...", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and may be one or more. Taking the "first apparatus" as an example, the number of "apparatuses" may be one or more. In addition, the objects modified by different prefixes may be the same or different. For example, if the descriptive object is "apparatus", then the "first apparatus" and the "second apparatus" may be the same device or different apparatuses, and their types may be the same or different. For another example, if the descriptive object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, the terms such as "in response to...", "in response to determining...", "in the case of...", "at the time of...", "when...", "if...", "provide that...", etc. can be used interchangeably.

In some embodiments, the terms such as "greater than", "greater than or equal to", "not less than", "more than", "more than or equal to", "not less than", "higher than", "higher than or equal to", "not lower than", and "above" can be replaced with each other, and the terms such as "less than", "less than or equal to", "not greater than", "less than", "less than or equal to", "no more than", "lower than", "lower than or equal to", "not higher than", and "below" can be replaced with each other.

In some embodiments, the apparatus, etc. can be interpreted as physical or virtual, and their names are not limited to the names recorded in embodiments. The terms such as "apparatus", "equipment", "device", "circuit", "network element", "node", "function", "unit", "section", "system", "network", "chip", "chip system", "entity", and "subject" can be used interchangeably.

In some embodiments, the term "network" can be understood as apparatuses included in the network, such as an access network device, a core network device or the like.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like can be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like can be used interchangeably.

In some embodiments, the access network device, the core network device, or the network device may be replaced by the terminal. For example, various embodiments of the present disclosure can also be applied to a structure in which the communication between the access network device, the core network device, or the network device and the terminal is replaced by the communication between multiple terminals (for example, it can also be referred to as device-to-device (D2D), vehicle-to-everything (V2X), etc.). In this case, the terminal may be set to have a structure that has all or part of functions of the access network device. In addition, the terms such as "uplink" and "downlink" can also be replaced by the terms corresponding to the communication between the terminals (for example, "side"). For example, the uplink channel, the downlink channel, etc. may be replaced by the side channel, and the uplink, the downlink, etc. may be replaced by the side link.

In some embodiments, the terminal may be replaced by the access network device, the core network device, or the network device. In this case, the access network device, the core network device, or the network device may also be configured to have a structure that has all or part of functions of the terminal.

In some embodiments, the acquisition of data, information, etc. may comply with the laws and regulations of the country where the data is obtained.

In some embodiments, data, information, etc. may be obtained with the user's consent.

In addition, each element, each row, or each column in the table of embodiments of the present disclosure may be implemented as an independent embodiment, and the combination of any elements, any rows, or any columns may also be implemented as an independent embodiment.

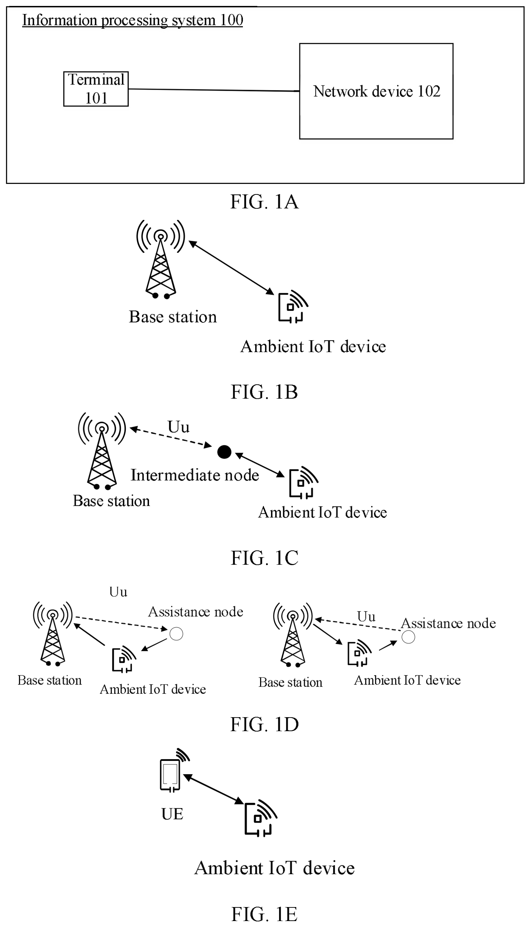

**FIG.** 1A is a schematic diagram of an information processing system 100 according to an embodiment of the present disclosure.

As shown in FIG. 1A, the information processing system 100 includes a terminal 101, and a network device 102.

In some embodiments, the network device 102 may include at least one of an access network device or a core network device.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

In some embodiments, an access network device may be, for example, a node or device that accesses a terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited thereto.

In some embodiments, the technical solution of the present disclosure may be applicable to an Open RAN architecture. In this case, the interfaces between or within the access network devices involved in embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited thereto.

In some embodiments, the core network device may be one device, including a first network element 1031, a second network element 1032, a third network element 1033 etc., or may be a plurality of devices or a group of devices including all or part of the first network element and the second network element. The network element may be virtual or physical. The core network may include, for example, at least one of an Evolved Packet Core (EPC), a 5G Core Network (5GCN), or a Next Generation Core (NGC).

In some embodiments, the first network element 1031 is used to manage ambient IoT devices; the first network element may be, for example, an ambient IoT device management function (AIDMF), but its name is not limited thereto.

In some embodiments, the second network element 1032 may be, for example, a Direct Discovery Name Management Function (DDNMF), but its name is not limited thereto.

In some embodiments, the third network element 1033 may be, for example, a ProSe Key Management Function (PKMF), but its name is not limited thereto.

In some embodiments, the fourth network element 1034 may be, for example, a policy control function (PCF), but its name is not limited thereto.

It can be understood that the information processing system described in embodiments of the present disclosure aims to more clearly illustrate the technical solution of embodiments of the present disclosure, and does not constitute a limitation on the technical solution disclosed in embodiments of the present disclosure. A person skilled in the art can know that with the evolution of the system architecture and the emergence of new business scenarios, the technical solution disclosed in embodiments of the present disclosure are also applicable to similar technical problems.

The following embodiments of the present disclosure may be applied to the information processing system 100 or part of the entities shown in FIG. 1A, but are not limited thereto. The entities shown in FIG. 1A are examples, and the information processing system may include all or part of the entities in FIG. 1A, or may include other entities other than those shown in FIG. 1A, and the number and form of the entities are arbitrary, and the connection relationships between the entities are examples, and the entities may be connected or disconnected, and the connection may be in any manner, which may be a direct connection or an indirect connection, and may be a wired connection or a wireless connection.

Embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems can also be combined (for example, a combination of LTE or LTE-A and 5G, etc.) for application.

In some embodiments, a network topology architecture for wireless communication based on ambient energy devices is implemented based on the backscatter technology. For example, the network topology architecture may include one of the following.

Topology 1: referring to FIG. 1B, a direct bidirectional communication between an ambient power IoT device and a base station is supported. The bidirectional communication may be downlink (DL) and uplink (UL) communication. The communication between the base station and the ambient IoT device includes ambient IoT device data and/or signaling. The topology 1 includes the possibility that the base station sends to the ambient IoT device different data than what the base station receives from the ambient IoT device.

Topology 2: referring to FIG. 1C, a bidirectional communication is performed between an intermediate node and the ambient IoT device and between the intermediate node and the base station; for example, the intermediate node may be at least one of a relay, an integrated access backhaul (IAB), a UE, or a repeater. The intermediate node transmits information between the base station and the IoT device.

Topology 3: referring to FIG. 1D, the ambient IoT device sends data and/or signaling to the base station and receives signaling and/or data from an assistance node; or the ambient IoT device receives data and/or signaling from the base station and sends the data and/or signaling to the assistance node. In the topology 3, the assistance node may be at least one of a relay, an IAB, a UE, or a repeater.

Topology 4: referring to FIG. 1E, a direct bidirectional communication is performed between the ambient IoT device and the UE. The communication between the UE and the ambient IoT device includes ambient IoT data and/or signaling.

Based on the above topology, the ambient IoT devices may transmit and report sensor data to the core network and/or an application server. However, if the collected data is transmitted without protection, an attacker near the ambient IoT device may obtain or tamper with these privacy-sensitive information. In addition, if the unprotected identity is also included in a response message or a report message sent from the ambient IoT device, the attacker can track the ambient IoT device. Therefore, how to protect the security of messages between the ambient IoT device and the gNB/assistance node/intermediate node/UE is important.

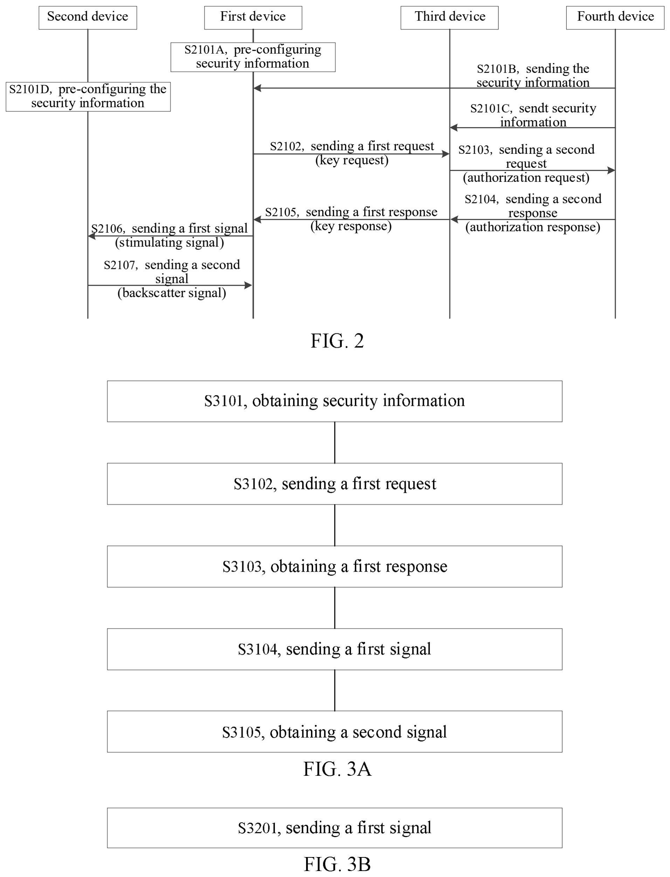

FIG. 2 is an interactive schematic diagram of an information processing method according to an embodiment of the present disclosure. As shown in FIG. 2, an embodiment of the present disclosure relates to an information transmission method applied in the information processing system 100, and the method includes the following steps.

At step S2101A, the first device pre-configures security information.

In some embodiments, the first device pre-configures the security information based on a protocol. Optionally, the protocol may be a wireless standard communication protocol, or a regulation negotiated between the first device and another device (e.g., a core network device, a second device, etc.).

In some embodiments, the first device pre-configures the security information based on a user input operation.

In some embodiments, the security information is used for a secure communication between the first device and the second device. Optionally, the security information is used for a security protection and/or security verification of a signal transmitted between the first device and the second device.

For example, the security information is used for the first device to perform the security protection and/or security verification on a first signal.

For example, the security information is used for the second device to perform the security protection and/or security verification on a second signal.

Optionally, the security protection includes at least one of: a confidentiality protection or an integrity protection. The security protection includes at least one of: a confidentiality verification or an integrity verification. The confidentiality protection may be encryption. The confidentiality verification may be decryption.

In some embodiments, the name of the security information is not limited, and it may be, for example, security material, security information, policy and security material, or fourth information, etc. The fourth information may be any information used for the security protection and/or security verification.

In some embodiments, the security information includes at least one of:
key information, in which the key information is used for at least one of: a confidentiality protection or an integrity protection;
password information, in which the password information is used for encoding and/or decoding; or
security algorithm information, in which the security algorithm information is used to indicate at least one of: an algorithm used for a confidentiality protection or an algorithm used for an integrity protection.

Optionally, the key information may include at least one of: a long-term credential, an intermediate key, or a security key. The long-term credential may include at least one of a root key or a symmetric key. The intermediate key may be determined based on the long-term credential. The security key may include at least one of a confidentiality key or an integrity key.

Optionally, the name of the key information is not limited, and it may be, for example, a long-term credential or a key.

Optionally, the name of the password information is not limited, and it may be, for example, a password or coding information.

Optionally, the security algorithm information includes at least one of a first algorithm identifier or a second algorithm identifier. For example, the first algorithm identifier indicates an algorithm used for the confidentiality protection; and the second algorithm identifier indicates an algorithm used for the integrity protection.

Optionally, the name of the security algorithm information is not limited, and it may be, for example, a security algorithm, a security algorithm identifier, or a security sending material, etc.

In some embodiments, the first device includes at least one of: a base station, a relay IAB, a terminal, or a repeater. Optionally, the second device may be at least one of a terminal or an ambient IoT device.

In some embodiments, the first device may be at least one of an assistance node or an intermediate node in the previous embodiments.

In some embodiments, the first device may be referred to as a reader or a viewer. Alternatively, the second device may be referred to as a tag device (Tag).

At step S2101B, the fourth device sends the security information to the first device.

Optionally, the first device sends the security information to the third device, and the third device sends the security information to the first device.

In some embodiments, the first device receives the security information sent by the fourth device.

Optionally, the first device receives the security information sent by the third device, in which the security information is sent by the fourth device to the third device.

In some optional embodiments, the first device sends a third request to the fourth device, in which the third request is used to request the security information. Optionally, the first device sends the third request to the third device, and the third device forwards the third request to the fourth device.

In some embodiments, the third device may be a core network device. For example, the third device may be at least one of: a PCF, a DDNMF, a PKMF, or a first network element. Optionally, the first network element is used to manage the second device. Optionally, the first network element is used to manage an ambient IoT device.

In some embodiments, the fourth device may be at least one of an application server or an operator device. Optionally, the operator device may be a terminal in the previous embodiment, etc.

**At** step S2101C, the fourth device sends the security information to the third device.

In some embodiments, the third device receives the security information sent by the fourth device.

In some optional embodiments, the third device pre-configures the security information.

At step S2101D, the second device pre-configures the security information.

In some embodiments, the second device pre-configures the security information based on the protocol.

In some optional embodiments, the fourth device sends the security information to the second device. Optionally, the second device receives the security information sent by the fourth device.

In some embodiments, the second device may be an ambient IoT device. Alternatively, the ambient IoT device may be a terminal in the previous embodiment.

At step S2102, the second device receives a first request sent by the third device.

In some embodiments, the third device receives the first request sent by the first device.

In some embodiments, the first request is used to request the security information.

In some embodiments, the name of the first request is not limited, and it may be, for example, a key request, a password request, a key algorithm request, or a security information request, etc.

In some embodiments, the first request includes at least one of:
a third identifier, used to indicate the first device;
a first identifier, used to indicate the second device; or
a service identifier, used to indicate a service of the second device.

Optionally, the third identifier, the first identifier and the service identifier may be any code, number, index or character string, etc. The service identifier may indicate a service to be executed by the second device or a service to be used by the second device, etc.

Optionally, the name of the third identifier is not limited, and it may be, for example, a device identifier, a first device identifier, or first device identity information, etc.

Optionally, the name of the first identifier is not limited, and it may be, for example, a device identifier, a second device identifier, or second device identity information.

At step S2103, the third device sends a second request to the fourth device.

In some embodiments, the fourth device receives the second request sent by the third device.

**In** some embodiments, the second request is used to request authorization of whether the first device is capable of performing a secure communication with the second device. Optionally, the second request may be used to request the security information.

In some embodiments, the name of the second request is not limited, and it may be, for example, an authorization request or a secure communication request, etc.

In some embodiments, the second request may include at least one of: the third identifier, the first identifier, or the service identifier.

At step S2104, the fourth device sends a second response to the third device.

In some embodiments, the third device receives the second response sent by the fourth device.

**In** some embodiments, the second response is determined based on the second request.

In some embodiments, the second response is used to indicate that the first device is authorized to perform the secure communication with the second device. Optionally, the second response is used to indicate whether the first device is authorized to perform the secure communication with the second device.

In some embodiments, the name of the second response is not limited, and it may be, for example, an authorization response, or a secure communication response, etc.

In some embodiments, the second response includes one of:
first indication information, used to indicate that the first device is authorized to perform the secure communication with the second device; or
second indication information, used to indicate that the first device is not authorized to perform the secure communication with the second device.

Optionally, the first indication information may be used to indicate that the first device has the right to perform the secure communication with the second device; and the second indication information may indicate that the first device has no right to perform the secure communication with the second device.

Optionally, both the first indication information and the second indication information may be one or more bits. For example, the first indication information is "0" or "00", which indicates that the first device is authorized to perform the secure communication with the second device; the second indication information is "1" or "11", which indicates that the first device is not authorized to perform the secure communication with the second device.

Optionally, the first indication information is the security information, and the second indication information is a rejection indication.

Optionally, the names of the first indication information and the second indication information are not limited. The first indication information is, for example, an authorized indication, and the second indication information is, for example, an unauthorized indication.

In some embodiments, when the second response includes the first indication information, the second response may also include the security information.

At step S2105, the third device sends a first response to the first device.

In some embodiments, the first device receives the first response sent by the third device.

In some embodiments, the third device sends the first response to the first device based on the received second response including the first indication information.

In some embodiments, the third device sends the first response to the first device in response to determining that the first device is authorized to perform the secure communication with the second device.

In some embodiments, the first response is determined based on the first request. Optionally, the first response is sent by the third device in a case of determining that the first device is authorized to perform the secure communication with the second device.

In some embodiments, the name of the first response is not limited, and it may be, for example, a key response, a password response, a key algorithm response, or a secure communication response, etc.

In some embodiments, the first response includes the security information.

At step S2106, the first device sends a first signal to the second device.

In some embodiments, the second device receives the first signal sent by the first device.

In some embodiments, the first signal is used to stimulate the second device to send a second signal, that is, the second device may use the energy of the first signal to perform backscatter transmission to send the second signal.

In some embodiments, the first signal is used to stimulate the second device to report the second signal including the second information.

In some embodiments, the name of the first signal is not limited, and it may be, for example, a stimulating signal or a trigger signal, etc.

In some embodiments, the first signal includes first information for which the security protection is performed using the security information.

Optionally, the first device performs the confidentiality protection and/or integrity protection on the first signal including the first information based on the key information in the security information. For example, the first device performs the confidentiality protection and/or integrity protection on the first signal including the first information based on the key information and the key algorithm information.

Optionally, the first device encodes the first signal including the first information based on the password information in the security information.

Optionally, the first signal includes the first identifier.

Optionally, the first information is used to determine the second information.

Optionally, the first information may be used to query whether the second device exists, or the first information may be used to query sensor data of the second device, or the first information may be used to perform inventory counting for the second device, etc.

Optionally, the name of the first information is not limited, and it may be, for example, a query request, a sensor data request, or an inventory request, etc.

In some embodiments, the security protection is not performed on the first signal using the security information.

At step S2107, the second device sends a second signal to the first device.

In some embodiments, the first device receives the second signal sent by the second device.

Optionally, the second signal is determined based on the first signal.

Optionally, the security protection is performed on the second signal using the security information.

In some embodiments, the second signal is used to respond to the first signal sent by the first device. Optionally, the second signal is used to report the second information or third information.

In some embodiments, the name of the second signal is not limited, and it may be, for example, a backscatter signal or a data reporting signal, etc.

In some optional embodiments, the first signal includes the first information for which the security protection is performed using the security information, and the second device performs the security verification on the first signal.

Optionally, the second device performs the integrity verification and/or decryption on the first signal based on the key information in the security information to obtain the first information.

Optionally, the second device decodes the first signal based on the password information in the security information to obtain the first information.

In some optional embodiments, the second device determines the second information based on the first information.

Optionally, the second information may be used to respond to whether the second device exists, or the second information may be used to report the sensor data of the second device, or the second information may be used to respond to the inventory counting of the second device.

Optionally, the name of the second information is not limited, and it may be, for example, a query response, or sensor data, a third identifier, etc.

In some embodiments, the first signal includes the first information for which the security protection is performed using the security information, and the second signal includes the second information for which the security protection is performed using the security information.

Optionally, the second device performs the confidentiality protection and/or integrity protection on the second signal including the second information based on the key information in the security information. For example, the second device performs the confidentiality protection and/or integrity protection on the second signal including the second information based on the key information and the key algorithm information.

Optionally, the second device encodes the second signal including the second information based on the password information in the security information.

In some optional embodiments, when the first signal includes the first identifier, the second device sends the second signal to the first device based on the first identifier being the same as a second identifier stored in the second device. Optionally, the second identifier is used to identify the second device.

In some embodiments, when the security protection is not performed on the first signal using the security information, the second signal includes third information for which the security protection is performed using the security information.

Optionally, the second device performs the confidentiality protection and/or integrity protection on the second signal including the third information based on the key information in the security information. For example, the second device performs the confidentiality protection and/or integrity protection on the second signal including the third information based on the key information and the key algorithm information.

Optionally, the second device encodes the second signal including the third information based on the password information in the security information.

Optionally, the third information may be used to respond to whether the second device exists, or the third information may be used to actively report the sensor data of the second device, etc.

Optionally, the name of the third information is not limited, and it may be, for example, a reply response, the sensor data, or the third identifier, etc.

In some optional embodiments, the second device determines the second signal based on the first signal.

In some optional embodiments, the second device performs the security protection on the second signal.

Optionally, the second signal includes the second information for which the security protection is performed using the security information. For example, the first device performs the integrity verification and/or decryption on the second signal based on the key information in the security information to obtain the second information. For example, the first device decodes the second signal based on the password information in the security information to obtain the second information.

Optionally, the second signal includes the third information for which the security protection is performed using the security information. For example, the first device performs the integrity verification and/or decryption on the second signal based on the key information in the security information to obtain the third information. For example, the first device decodes the second signal based on the password information in the security information to obtain the third information.

In some optional embodiments, the second device stores at least one of the following in an association manner: a first identifier of at least one second device and security information corresponding to the first identifier; or at least one service identifier and security information corresponding to the service identifier.

In some embodiments, the name of information or the like is not limited to the names described in embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be used interchangeably.

In some embodiments, "obtain", "acquire", "get", "receive", "transmit", "bi-directionally transmit", "send and/or receive" may be used interchangeably, and may be interpreted as receiving from other entities, obtaining from protocols, obtaining from high levels, obtaining by self-processing, autonomous implementation, etc.

In some embodiments, terms such as "sending", "transmitting", "reporting", "distributing", "transmitting", "bi-directionally transmitting", and "sending and/or receiving" may be used interchangeably.

**In** some embodiments, terms such as "certain", "preset", "default", "set", "indicated", "a certain", "any" and "first" may be used interchangeably. Terms such as "certain A", "preset A", "default A", "set A", "indicated A", "a certain A", "any A" and "first A" may be interpreted as A pre-defined in a protocol or the like, or as A obtained through setting, configuration, or indication, or as specific A, a certain A, any A, or first A, but are not limited to this.

In some embodiments, determination or judgment may be performed by a value represented by 1 bit (0 or 1), by a true or false value (Boolean value) represented by true or false, or by comparison of numerical values (for example, comparison with a predetermined value), but is not limited thereto.

In the information processing method involved in the embodiments of the present disclosure, step S2101 may include at least one of step S2101A, step S2101B, step S2101C or step S2101D.

The information processing method according to the embodiments of the present disclosure may include at least one of step S2101 to step S2107. For example, step S2106 may be implemented as an independent embodiment, step S2107 may be implemented as an independent embodiment, steps S2106+S2107 may be implemented as an independent embodiment, steps S2101+S2106 may be implemented as an independent embodiment, steps S2101+S2106+S2107 may be implemented as an independent embodiment, steps S2102+S2105+S2106+S2107 may be implemented as an independent embodiment, steps S2101+S2102+S2105+S2106+S2107 may be implemented as an independent embodiment, steps S2102+S2103+S2104+S2105+S2106+S2107 may be implemented as an independent embodiment, steps S2101-S2107 may be implemented as an independent embodiment.

**In** some embodiments, steps S2101A, S2101B, S2101C and S2101D in step S2101 may be performed in an exchanged order or simultaneously.

In some embodiments, steps S2101, S2102, S2103, S2104, S2105 and S2107 are optional, and one or more of these steps may be omitted or replaced in different embodiments.

**In** some embodiments, steps S2101, S2102, S2103, S2104, and S2105 are optional, and one or more of these steps may be omitted or replaced in different embodiments.

In some embodiments, steps S2102, S2103, S2104, and S2105 are optional, and one or more of these steps may be omitted or replaced in different embodiments.

In some embodiments, reference may be made to other optional implementations described before or after the specification corresponding to FIG. 2.

FIG. 3A is a flowchart illustrating an information processing method according to an embodiment of the present disclosure. As shown in FIG. 3A, an embodiment of the present disclosure relates to an information processing method performed by a first device, and the method includes the following steps.

At step S3101, security information is obtained.

In some embodiments, the first device pre-configures the security information.

In some embodiments, the first device receives the security information sent by a third device. Optionally, the security information is sent by a fourth device to the third device.

Regarding an optional implementation of step S3101, reference may be made to the optional implementations of steps S2101A and S2101B in FIG. 2 and other related parts of the embodiment involved in FIG. 2, which will not be repeated in detail here.

In some embodiments, the first device receives the security information sent by the fourth device, but the present disclosure is not limited thereto and the first device may also receive the security information sent by other entities.

In some embodiments, the first device obtains the security information specified by a protocol.

In some embodiments, the first device obtains the security information from an upper layer(s).

In some embodiments, the first device performs processing to obtain the security information.

In some embodiments, step S3101 is omitted, the first device autonomously implements the function indicated by the security information, or the above function is default or preset.

At step S3102, a first request is sent.

Regarding an optional implementation of step S3102, reference may be made to the optional implementation of step S2102 in FIG. 2 and other related parts of the embodiment involved in FIG. 2, which will not be repeated in detail here.

In some embodiments, the first device sends the first request to the third device, but the present disclosure is not limited thereto, and the first request may also be sent to other entities.

At step S3103, a first response is obtained.

Regarding an optional implementation of step S3103, reference may be made to the optional implementation of step S2105 in FIG. 2 and other related parts of the embodiment involved in FIG. 2, which will not be repeated in detail here.

In some embodiments, the first device receives the first response sent by the third device, but the present disclosure is not limited thereto and the first device may also receive the first response sent by other entities.

In some embodiments, the first device obtains the first response specified by the protocol.

In some embodiments, the first device obtains the first response from an upper layer(s).

In some embodiments, the first device performs processing to obtain the first response.

In some embodiments, step S3103 is omitted, the first device autonomously implements the function indicated by the first response, or the above function is default or preset.

At step S3104, a first signal is sent.

Regarding an optional implementation of step S3104, reference may be made to the optional implementation of step S2106 in FIG. 2 and other related parts of the embodiment involved in FIG. 2, which will not be repeated in detail here.

In some embodiments, the first device sends the first signal to the second device, but the present disclosure is not limited thereto, and the first signal may also be sent to other entities.

At step S3105, a second signal is obtained.

Regarding an optional implementation of step S3105, reference may be made to the optional implementation of step S2107 in FIG. 2 and other related parts of the embodiment involved in FIG. 2, which will not be repeated in detail here.

In some embodiments, the first device receives the second signal sent by the second device, but the present disclosure is not limited thereto and the first device may also receive the second signal sent by other entities.

In some embodiments, the first device obtains the second signal specified by the protocol.

In some embodiments, the first device obtains the second signal from an upper layer(s).

In some embodiments, the first device performs a security protection on the first signal.

In some embodiments, the first device performs a security verification on the second signal.

In some embodiments, the first device stores at least one of the following in an association manner: a first identifier of at least one second device and security information corresponding to the first identifier; or at least one service identifier and security information corresponding to the service identifier.

The information processing method involved in the embodiments of the present disclosure may include at least one of step S3101 to step S3105. For example, step S3104 may be implemented as an independent embodiment, step S3105 may be implemented as an independent embodiment, steps S3104+S3105 may be implemented as an independent embodiment, steps S3101+S3104 may be implemented as an independent embodiment, steps S3101+S3104+S3105 may be implemented as an independent embodiment, steps S3102+S3103+S3104+S3105 may be implemented as an independent embodiment, and steps S3101+S3102+S3103+53104+S3105 may be implemented as an independent embodiment.

In some embodiments, steps S3101, S3102, S3103 and S3105 are optional, and one or more of these steps may be omitted or replaced in different embodiments.

In some embodiments, steps S3101, S3102 and S3103 are optional, and one or more of these steps may be omitted or replaced in different embodiments.

FIG. 3B is an interactive schematic diagram of an information processing method according to an embodiment of the present disclosure. As shown in FIG. 3B, an embodiment of the present disclosure relates to an information processing method performed by a first device, and the method includes the following steps.

At step S3201, a first signal is sent.

Regarding an optional implementation of step S3201, reference may be made to the optional implementations of step S2106 in FIG. 2 and step S3104 in FIG. 3, and other related parts of embodiments involved in FIG. 2 and FIG. 3, which will not be repeated in detail here.

Optionally, the first signal is used to stimulate a second device to send a second signal; a security protection is performed on at least one of the first signal or the second signal using security information. The second device may use the energy of the received first signal to perform backscatter transmission to send the second signal.

In some embodiments, the security information includes at least one of:
key information, in which the key information is used for at least one of: a confidentiality protection or an integrity protection;
password information, in which the password information is used for encoding and/or decoding; or
security algorithm information, in which the security algorithm information is used to indicate at least one of: an algorithm used for a confidentiality protection or an algorithm used for an integrity protection.

In some embodiments, the first signal includes first information for which the security protection is performed using the security information, and the method further includes: receiving the second signal sent by the second device; in which the second signal includes second information for which the security protection is performed using the security information, and the second information is determined based on the first information.

In some embodiments, the first signal includes a first identifier, and the first identifier is used to identify the second device; in which the second signal is sent by the second device when it determines that the first identifier is the same as a second identifier stored in the second device.

In some embodiments, the method includes one of:
performing an integrity verification and/or decryption on the second signal based on the key information in the security information to obtain second information; or
decoding the second signal based on the password information in the security information to obtain second information.

In some embodiments, the security protection is not performed on the first signal using the security information, and the method further includes: receiving the second signal sent by the second device; in which the second signal includes third information for which the security protection is performed.

In some embodiments, the method includes one of:
performing an integrity verification and/or decryption on the second signal based on the key information in the security information to obtain the third information; or
decoding the second signal based on the password information in the security information to obtain the third information.

In some embodiments, the method further includes: sending a first request to a third device, in which the first request is used to request the security information.

In some embodiments, the first request includes at least one of:
a third identifier, used to indicate the first device;
a first identifier, used to indicate the second device; or
a service identifier, used to indicate a service of the second device.

In some embodiments, the method further includes: receiving a first response sent by the third device, in which the first response includes the security information; the first response is sent by the third device after determining that the first device is authorized to perform a secure communication with the second device.

In some embodiments, the method further includes one of: pre-configuring the security information; or obtaining the security information from a fourth device.

In some embodiments, the method further includes at least one of:
storing a first identifier of at least one second device and security information corresponding to the first identifier in an association manner; or
storing a service identifier and security information corresponding to the service identifier in an association manner.

In some embodiments, the first device includes at least one of: a base station, an assistance node, an intermediate node, an IAB, or a UE; and/or the second device includes at least one of: an ambient IoT device; and/or the third device includes at least one of: a PCF, a DDNMF, a PKMF, or a first network element; and/or the fourth device includes at least one of: an application server or an operator device.

The above embodiments may be implemented individually or in combination with each other. For optional implementations, reference may be made to the optional implementations of the steps in FIG. 2 and FIG. 3A, which will not be described in detail here.

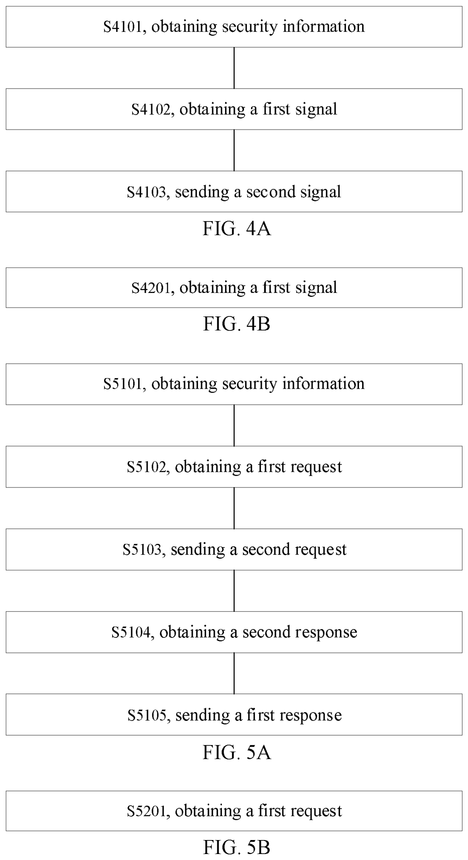

FIG. 4A is a flowchart illustrating an information processing method according to an embodiment of the present disclosure. As shown in FIG. 4A, an embodiment of the present disclosure relates to an information processing method performed by a second device, and the method includes the following steps.

At step S4101, security information is obtained.

In some embodiments, the second device pre-configures the security information.

In some embodiments, the second device receives the security information sent by a third device. Optionally, the security information is sent by a fourth device to the third device.

Regarding an optional implementation of step S4101, reference may be made to the optional implementation of step S2101D in FIG. 2 and other related parts of the embodiment involved in FIG. 2, which will not be repeated in detail here.

In some embodiments, the second device receives the security information sent by the fourth device, but the present disclosure is not limited thereto and the second device may also receive the security information sent by other entities.

In some embodiments, the second device obtains the security information specified by a protocol.

In some embodiments, the second device obtains the security information from an upper layer(s).

In some embodiments, the second device performs processing to obtain the security information.

In some embodiments, step S4101 is omitted, the second device autonomously implements the function indicated by the security information, or the above function is default or preset.

At step S4102, a first signal is obtained.

Regarding an optional implementation of step S4102, reference may be made to the optional implementation of step S2106 in FIG. 2 and other related parts of the embodiment involved in FIG. 2, which will not be repeated in detail here.

In some embodiments, the second device receives the first signal sent by the first device, but the present disclosure is not limited thereto, and the second device may also receive the first signal sent by other entities.

In some embodiments, the second device obtains the first signal specified by the protocol.

In some embodiments, the second device obtains the first signal from an upper layer(s).

At step S4103, a second signal is sent.

Regarding an optional implementation of step S4103, reference may be made to the optional implementation of step S2107 in FIG. 2 and other related parts of the embodiment involved in FIG. 2, which will not be repeated in detail here.

In some embodiments, the second device sends the second signal to the first device, but the present disclosure is not limited thereto, and the second signal may also be sent to other entities.

In some embodiments, the second device performs a security verification on the first signal.

In some embodiments, the second device performs a security protection on the second signal.

The information processing method involved in the embodiments of the present disclosure may include at least one of step S4101 to step S4103. For example, step S4102 may be implemented as an independent embodiment, step S4103 may be implemented as an independent embodiment, steps S4102+S4103 may be implemented as an independent embodiment, steps S4101+S4102 may be implemented as an independent embodiment, steps S4101+S4103 may be implemented as an independent embodiment, and steps S4101+S4102+S4103 may be implemented as an independent embodiment.

In some embodiments, steps S4101, and S4102 are optional, and one or more of these steps may be omitted or replaced in different embodiments.

In some embodiments, step S4101 is optional, and one or more of these steps may be omitted or replaced in different embodiments.

FIG. 4B is an interactive schematic diagram of an information processing method according to an embodiment of the present disclosure. As shown in FIG. 4B, an embodiment of the present disclosure relates to an information processing method performed by a second device, and the method includes the following steps.

At step S4201, a first signal is obtained.

Regarding an optional implementation of step S4201, reference may be made to the optional implementations of step S2106 in FIG. 2 and step S4102 in FIG. 4A, and other related parts of embodiments involved in FIG. 2 and FIG. 4A, which will not be repeated in detail here.

In some embodiments, obtaining the first signal includes: the second device receiving the first signal sent by the first device.

The method also includes: sending a second signal based on the first signal; in which a security protection is performed on at least one of the first signal or the second signal using security information.

In some embodiments, the security information includes at least one of:
key information, in which the key information is used for at least one of: a confidentiality protection or an integrity protection;
password information, in which the password information is used for encoding and/or decoding; or
security algorithm information, in which the security algorithm information is used to indicate at least one of: an algorithm used for a confidentiality protection or an algorithm used for an integrity protection.

In some embodiments, the first signal includes first information for which the security protection is performed using the security information, and the method includes one of:
performing an integrity verification and/or decryption on the first signal based on the key information in the security information to obtain first information; or
decoding the first signal based on the password information in the security information to obtain first information.

In some embodiments, the method further includes:
determining second information based on the first information;
sending a second signal to the first device, in which the second signal includes the second information for which the security protection is performed using the security information.

In some embodiments, the first signal includes a first identifier, and the first identifier is used to identify the second device; sending the second signal to the first device includes: sending the second signal to the first device based on the first identifier being the same as a second identifier stored in the second device.

In some embodiments, the security protection is not performed on the first signal using the security information, and the method includes: sending the second signal to the first device, in which the second signal is third information for which the security protection is performed using the security information.

In some embodiments, the method further includes one of: pre-configuring the security information; and obtaining the security information from a fourth device.

In some embodiments, the first device includes at least one of: a base station, an assistance node, an intermediate node, an IAB or a UE; and/or the second device includes at least one of: an ambient IoT device; and/or the fourth device includes at least one of: an application server or an operator device.

The above embodiments may be implemented individually or in combination with each other. For optional implementations, reference may be made to the optional implementations of the steps in FIG. 2 and FIG. 4A, which will not be described in detail here.

FIG. 5A is a flowchart illustrating an information processing method according to an embodiment of the present disclosure. As shown in FIG. 5A, an embodiment of the present disclosure relates to an information processing method performed by a third device, and the method includes the following steps.

At step S5101, security information is obtained.

In some embodiments, the third device pre-configures the security information.

In some embodiments, the third device receives the security information sent by a fourth device.

Regarding an optional implementation of step S5101, reference may be made to the optional implementation of step S2101C in FIG. 2 and other related parts of the embodiment involved in FIG. 2, which will not be repeated in detail here.

In some embodiments, the third device receives the security information sent by the fourth device, but the present disclosure is not limited thereto and the third device may also receive the security information sent by other entities.

In some embodiments, the third device obtains the security information specified by the protocol.

In some embodiments, the third device obtains the security information from an upper layer(s).

In some embodiments, the third device performs processing to obtain the security information.

In some embodiments, step S5101 is omitted, the third device autonomously implements the function indicated by the security information, or the above function is default or preset.

At step S5102, a first request is obtained.

Regarding an optional implementation of step S5102, reference may be made to the optional implementation of step S2102 in FIG. 2 and other related parts of the embodiment involved in FIG. 2, which will not be repeated in detail here.

In some embodiments, the third device receives the first request sent by the first device, but the present disclosure is not limited thereto, and the third device may also receive the first request sent by other entities.

In some embodiments, the third device obtains the first request specified by the protocol.

In some embodiments, the third device obtains the first request from an upper layer(s).

In some embodiments, the third device performs processing to obtain the first request.

In some embodiments, step S5102 is omitted, the third device autonomously implements the function indicated by the first request, or the above function is default or preset.

At step S5103, a second request is sent.

Regarding an optional implementation of step S5103, reference may be made to the optional implementation of step S2103 in FIG. 2 and other related parts of the embodiment involved in FIG. 2, which will not be repeated in detail here.

In some embodiments, the third device sends the second request to the fourth device, but the present disclosure is not limited thereto, and the second request may also be sent to other entities.

At step S5104, a second response is obtained.

Regarding an optional implementation of step S5104, reference may be made to the optional implementation of step S2104 in FIG. 2 and other related parts of the embodiment involved in FIG. 2, which will not be repeated in detail here.

In some embodiments, the third device receives the second response sent by the fourth device, but the present disclosure is not limited thereto and the third device may also receive the second response sent by other entities.

In some embodiments, the third device obtains the second response specified by the protocol.

In some embodiments, the third device obtains the second response from an upper layer(s).

In some embodiments, the third device performs processing to obtain the second response.

In some embodiments, step S5102 is omitted, the third device autonomously implements the function indicated by the second response, or the above function is default or preset.

At step S5105, a first response is sent.

Regarding an optional implementation of step S5105, reference may be made to the optional implementation of step S2105 in FIG. 2 and other related parts of the embodiment involved in FIG. 2, which will not be repeated in detail here.

In some embodiments, the third device sends the first response to the first device, but the present disclosure is not limited thereto, and the first response may also be sent to other entities.

The information processing method involved in the embodiments of the present disclosure may include at least one of step S5101 to step S5105. For example, step S5101 may be implemented as an independent embodiment, steps S5102+S5105 may be implemented as an independent embodiment, steps S5101+S5102+S5105 may be implemented as an independent embodiment, steps S5102+S5103+S5104+S5105 may be implemented as an independent embodiment, and steps S5101+S5102+S5103+S5104+S5105 may be implemented as an independent embodiment.

In some embodiments, steps S5102, S5103, S5012 and S5105 are optional, and one or more of these steps may be omitted or replaced in different embodiments.

In some embodiments, step S5101 is optional, and one or more of these steps may be omitted or replaced in different embodiments.

FIG. 5B is an interactive schematic diagram of an information processing method according to an embodiment of the present disclosure. As shown in FIG. 5B, an embodiment of the present disclosure relates to an information processing method performed by a third device, and the method includes the following steps.

At step S5201, a first request is obtained.

Regarding an optional implementation of step S5201, reference may be made to the optional implementations of step S2102 in FIG. 2 and step S5102 in FIG. 5A, and other related parts of embodiments involved in FIG. 2 and FIG. 5A, which will not be repeated in detail here.

In some embodiments, obtaining the first request includes: receiving the first request sent by a first device, in which the first request is used to request security information; the security information is used for the first device to perform a security protection and/or a security verification on a first signal, and/or the security information is used for the second device to perform a security protection and/or a security verification on a second signal; and the second signal is determined based on the first signal.

In some embodiments, the security information includes at least one of:
key information, in which the key information is used for at least one of: a confidentiality protection or an integrity protection;
password information, in which the password information is used for encoding and/or decoding; or
security algorithm information, in which the security algorithm information is used to indicate at least one of: an algorithm used for a confidentiality protection or an algorithm used for an integrity protection.

In some embodiments, the first request includes at least one of:
a third identifier, used to indicate the first device;
a first identifier, used to indicate the second device; or
a service identifier, used to indicate a service of the second device.

In some embodiments, the method further includes: sending a second request to a fourth device, in which the second request is used to request authorization of whether the first device is capable of performing a secure communication with the second device.

In some embodiments, a second response sent by the fourth device is received, in which the second response includes one of:
first indication information, indicating that the first device is authorized to perform a secure communication with the second device; or
second indication information, indicating that the first device is not authorized to perform a secure communication with the second device.

In some embodiments, the method further includes: sending the first response to the first device based on the second response including the first indication information, in which the first response includes the security information. Optionally, the first indication information is the security information, and the second indication information is a rejection indication.

In some embodiments, the method further includes: in response to determining that the first device is authorized to perform a secure communication with the second device, sending the first response to the first device, in which the first response includes the security information.

In some embodiments, the method further includes: receiving the security information sent by the fourth device.

In some embodiments, the first device includes at least one of: a base station, an assistance node, an intermediate node, an IAB, or a UE; and/or the second device includes at least one of: an ambient IoT device; and/or the third device includes at least one of: a PCF, a DDNMF, a PKMF, or a first network element; and/or the fourth device includes at least one of: an application server or an operator device.

The above embodiments may be implemented individually or in combination with each other. For optional implementations, reference may be made to the optional implementations of the steps in FIG. 2 and FIG. 5A, which will not be described in detail here.

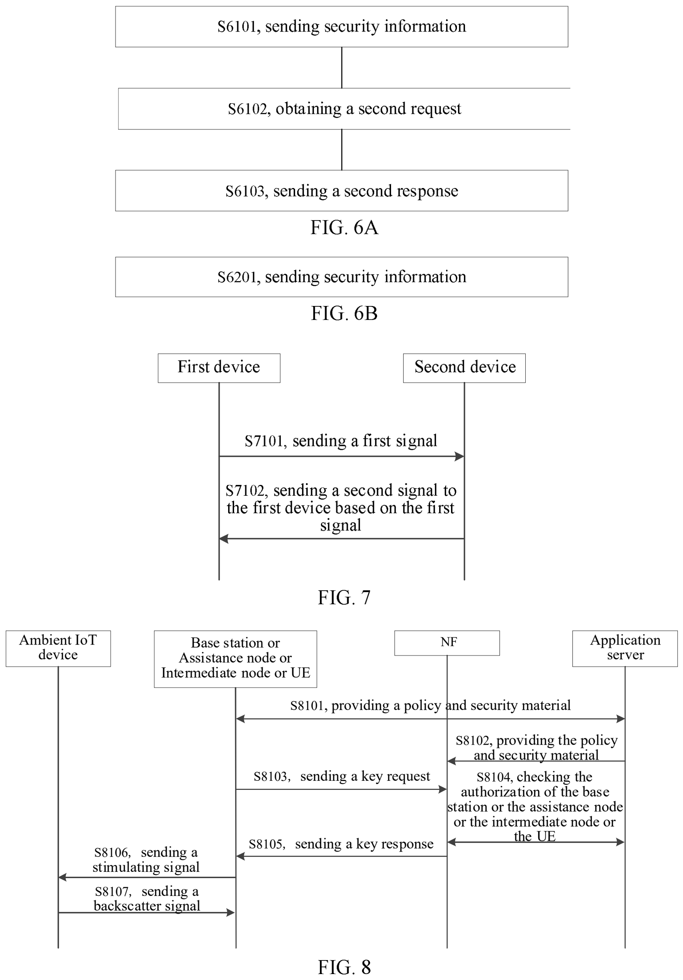

FIG. 6A is a flowchart illustrating an information processing method according to an embodiment of the present disclosure. As shown in FIG. 6A, an embodiment of the present disclosure relates to an information processing method performed by a fourth device, and the method includes the following steps.

At step S6101, security information is sent.

Regarding an optional implementation of step S6101, reference may be made to the optional implementation of step S2101C in FIG. 2 and other related parts of the embodiment involved in FIG. 2, which will not be repeated in detail here.

In some embodiments, the fourth device sends the security information to the third device, but the present disclosure is not limited thereto, and the security information may also be sent to other entities.

At step S6102, a second request is obtained.

Regarding an optional implementation of step S6102, reference may be made to the optional implementations of steps S2101A and S2101B in FIG. 2 and other related parts of the embodiment involved in FIG. 2, which will not be repeated in detail here.

In some embodiments, the fourth device receives the second request sent by the third device, but the present disclosure is not limited thereto, and the fourth device may also receive the second request sent by other entities.

In some embodiments, the fourth device obtains the second request specified by the protocol.

In some embodiments, the fourth device obtains the second request from an upper layer(s).

In some embodiments, the fourth device performs processing to obtain the second request.

In some embodiments, step S6102 is omitted, the second device autonomously implements the function indicated by the security information, or the above function is default or preset.

At step S6103, a second response is sent.

Regarding an optional implementation of step S6103, reference may be made to the optional implementation of step S2104 in FIG. 2 and other related parts of the embodiment involved in FIG. 2, which will not be repeated in detail here.

In some embodiments, the fourth device sends the second response to the third device, but the present disclosure is not limited thereto, and the second response may also be sent to other entities.

The information processing method involved in the embodiments of the present disclosure may include at least one of step S6101 to step S6103. For example, step S6101 may be implemented as an independent embodiment, steps S6102+S6103 may be implemented as an independent embodiment, and steps S6101+S6102+S6103 may be implemented as an independent embodiment.

In some embodiments, steps S6102 and S6103 are optional, and one or more of these steps may be omitted or replaced in different embodiments.

In some embodiments, step S6101 is optional, and one or more of these steps may be omitted or replaced in different embodiments.

FIG. 6B is an interactive schematic diagram of an information processing method according to an embodiment of the present disclosure. As shown in FIG. 6B, an embodiment of the present disclosure relates to an information processing method performed by a fourth device, and the method includes the following steps.

At step S6201, security information is sent.

Regarding an optional implementation of step S6201, reference may be made to the optional implementations of step S2101C in FIG. 2 and step S6101 in FIG. 6A, and other related parts of embodiments involved in FIG. 2 and FIG. 6A, which will not be repeated in detail here.

In some embodiments, sending the security information includes: providing the security information to a first device and/or a second device; in which the security information is used for the first device to perform a security protection and/or a security verification on a first signal, and/or the security information is used for the second device to perform a security protection and/or a security verification on a second signal; and the second signal is determined based on the first signal.

Optionally, the fourth device providing the security information to the first device and/or the second device, includes: the fourth device sending the security information to a third device; and the third device sends the security information to the first device and/or the second device.

In some embodiments, the security information includes at least one of:
key information, in which the key information is used for at least one of: a confidentiality protection or an integrity protection;
password information, in which the password information is used for encoding and/or decoding; or
security algorithm information, in which the security algorithm information is used to indicate at least one of: an algorithm used for a confidentiality protection or an algorithm used for an integrity protection.

In some embodiments, the method includes: receiving a second request sent by the third device, in which the second request is used to request authorization for the first device to perform a secure communication with the second device.

In some embodiments, the method further includes: sending a second response to the third device, in which the second response includes one of:
first indication information, indicating that the first device is authorized to perform a secure communication with the second device; or
second indication information, indicating that the first device is not authorized to perform a secure communication with the second device.

Optionally, the first indication information is the security information, and the second indication information is a rejection indication.

The above embodiments may be implemented individually or in combination with each other. For optional implementations, reference may be made to the optional implementations of the steps in FIG. 2 and FIG. 5A, which will not be described in detail here.

FIG. 7 is a flowchart illustrating an information processing method according to an embodiment of the present disclosure. As shown in FIG. 7, an embodiment of the present disclosure relates to an information processing method applied to a communication system, and the method includes the following steps.

At step S7101, a first device sends a first signal to a second device.

Optionally, a security protection is performed on the first signal using security information.

Optionally, a security protection is not performed on the first signal using security information.

Regarding an optional implementation of step S7101, reference may be made to the optional implementations of step S2106 in FIG. 2, step S3104 in FIG. 3A, and step S4102 in FIG. 4A, and other related parts of embodiments involved in FIG. 2, FIG. 3A and FIG. 4A, which will not be repeated in detail here.

At step S7102, the second device sends a second signal to the first device based on the first signal.

Optionally, a security protection is performed on the second signal using security information.

Regarding an optional implementation of step S7102, reference may be made to the optional implementations of step S2107 in FIG. 2, step S3105 in FIG. 3A, and step S4103 in FIG. 4A, and other related parts of embodiments involved in FIG. 2, FIG. 3A and FIG. 4A, which will not be repeated in detail here.

In some embodiments, the second device determines the second signal based on the first signal.

In some embodiments, the method further includes at least one of:
the first device receiving the security information sent by a fourth device; or
the second device receiving the security information sent by a fourth device.

In some embodiments, the method further includes:
the first device sending a first request to a third device, in which the first request is used to request the security information;
the third device sending a second request to the fourth device, in which the second request is used to request authorization for the first device to obtain the security information;
the fourth device sending a second response to the third device, in which the second response includes first indication information, which is used to indicate that the first device is authorized to obtain the security information;
the third device sending a first response to a first network node, in which the first response includes the security information.

Optionally, the first indication information is the security information, and the second indication information is a rejection indication.

In some embodiments, the above method may include the method described on the side of the above information processing system 100, the first device, the second device, the third device and the fourth device, etc., which will not be repeated here.

FIG. 8 is a flowchart of an information processing method according to an embodiment of the present disclosure. As shown in FIG. 8, an embodiment of the present disclosure relates to an information processing method, and the method includes the following step.

At step S8101, a policy and security material is provided.

In some embodiments, a base station or an assistance node or an intermediate node or a UE pre-configures the policy and security material, or an application server provides the policy and security material to the base station or the assistance node or the intermediate node or the UE through an application layer.

Optionally, the security material may include at least one of the following: a long-term credential, a password, or a security algorithm, etc.

Optionally, an ambient IoT device is pre-configured with the security material, for example, by an ambient IoT application or an operator.

Optionally, the policy and security material may be the security information in the previous embodiments. The policy may be the algorithm identification information in the previous embodiments.

In the case where step S8101 is provided, steps S8102 to S8105 may be skipped.

At step S8102, the application server provides the policy and security material to a network function (NF).

Optionally, the NF is a core network NF.

Optionally, the NF may include at least one of: a PCF, a DDNMF, a PKMF, or a first network element. The first network element is used to manage the ambient IoT device.

At step S8103, the base station, the assistance node, the intermediate node, or the UE sends a key request to the NF.

Optionally, before communicating with the ambient IoT device, the base station or the assistance node or the intermediate node or the UE needs to send the key request to the NF; the key request may include identity information of the base station or the assistance node or the intermediate node or the UE, and a service identifier of the requested ambient IoT device.

Optionally, the key request may be the first request in the previous embodiments.

At step S8104, the NF checks the authorization of the base station or the assistance node or the intermediate node or the UE by interacting with the application server.

Optionally, if the check of the authorization the base station or the assistance node or the intermediate node or the UE passes, the application server sends a key response with a success result; or, if the base station or the assistance node or the intermediate node or the UE is not authorized, the application server sends a key response with a failure result.

Optionally, the key response may be the first response in the previous embodiments.

At step S8105, the NF sends the key response to the base station or the assistance node or the intermediate node or the UE.

Optionally, if the base station or the assistance node or the intermediate node or the UE is authorized, the corresponding policy and security material is provided to the base station or the assistance node or the intermediate node or the UE through the network. The policy and security material may be generated and controlled by the application server or the NF, which is the same policy and security material on the ambient IoT device configured by the ambient IoT application or the operator.

At step S8106, the base station, the assistance node, the intermediate node, or the UE sends a stimulating signal.

Case 1: the base station or the assistance node or the intermediate node or the UE sends an unmodulated stimulating signal and waits for a reply message from the ambient IoT device.

Case 2: the base station or the assistance node or the intermediate node or the UE sends a query message. The query message is protected or encoded by the security material obtained from the application server or the NF. The query message includes an identifier of the ambient IoT device, which may be obtained through the application layer. The query message may also be a stimulating signal.

Optionally, the stimulating signal may be the first signal in the previous embodiments. The query message may be the first information in the previous embodiments.

At step S8107, the ambient IoT device sends a backscatter signal to the base station, the assistance node, the intermediate node, or the UE.

Case 1: the ambient IoT device receives the stimulating signal, reflects the backscatter signal and forms a reply message. The reply message is protected or encoded by the pre-configured security material. Optionally, the backscatter signal is the second signal in the previous embodiments; the reply message is the third information in the previous embodiments.

Case 2: the ambient IoT device receives a query message and undoes the protection or decoding by using the security material. If the ambient IoT device is a device to be queried, the ambient IoT device reflects the backscatter signal and forms a reply message. The reply message is protected or encoded by the security material. Optionally, the backscatter signal is the second signal in the previous embodiments; the reply message is the second information in the previous embodiments.

The information processing method involved in the embodiments of the present disclosure may include at least one of step S8101 to step S8107. For example, step S8106 may be implemented as an independent embodiment, and step S8107 may be implemented as an independent embodiment, steps S8106+S8107 may be implemented as an independent embodiment, steps S8101+S8106 may be implemented as an independent embodiment, steps S8101+S8106+S8107 may be implemented as an independent embodiment, steps S8102+S8105+S8106+S8107 may be implemented as an independent embodiment, steps S8101+S8102+S8105+S8106+S8107 may be implemented as an independent embodiment, steps S8102+S8103+S8104+S8105+S8106+S8107 may be implemented as an independent embodiment, and steps S8101 to S8107 may be implemented as an independent embodiment.

In some embodiments, step S8101, S8102, S8103, S8104, S8105 and S8107 are optional, and one or more of these steps may be omitted or replaced in different embodiments.

In some embodiments, step S8101, S8102, S8103, S8104 and S8105 are optional, and one or more of these steps may be omitted or replaced in different embodiments.

In some embodiments, step S8102, S8103, S8104 and S8105 are optional, and one or more of these steps may be omitted or replaced in different embodiments.

Embodiments of the present disclosure also propose an apparatus for implementing any of the above methods, for example, an apparatus is disclosed, the above apparatus includes units or modules for implementing various steps performed by the terminal in any of the above methods. For another example, another apparatus is disclosed, including units or modules for implementing various steps performed by the network device (such as an access network device, a core network function node, a core network device, etc.) in any of the above methods.

It should be understood that the division of the units in the above apparatus is only a division of logical functions, and in an actual implementation, they may be fully or partially integrated into one physical entity, or they may be physically separated. In addition, the units in the apparatus may be implemented in the form of a processor calling software: for example, the apparatus includes a processor, the processor is connected to a memory, and instructions are stored in the memory. The processor calls the instructions stored in the memory to implement any of the above methods or implement the functions of the units of the above apparatus. The processor is, for example, a general-purpose processor, such as a central processing unit (CPU) or a microprocessor, and the memory is a memory inside the device or a memory outside the device. Alternatively, the units in the apparatus may be implemented in the form of hardware circuits, and the functions of some or all of the units may be realized by designing the hardware circuits. The above hardware circuits can be understood as one or more processors. For example, in one implementation, the above hardware circuit is an application-specific integrated circuit (ASIC), and the functions of some or all of the above units are realized by designing the logical relationship of the components in the circuit. For example, in another implementation, the above hardware circuit may be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units. All units or modules of the above apparatuses may be realized in the form of a processor calling software, or in the form of a hardware circuit, or in part by a processor calling software, and the rest by a hardware circuit.

In embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units. In addition, it may also be a hardware circuit designed for artificial intelligence, which may be understood as an ASIC, such as a neural network processing unit (NPU), a tensor processing unit (TPU), a deep learning processing unit (DPU), etc.

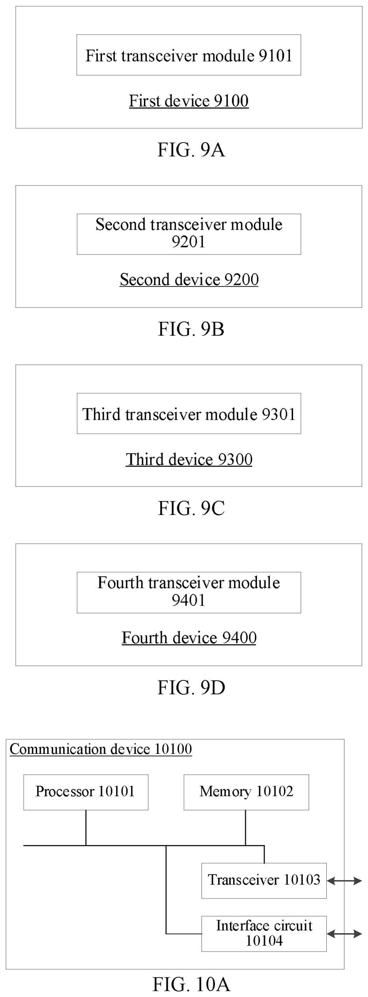

**FIG.** 9A is a schematic diagram of a first device disclosed in an embodiment of the present disclosure. As shown in FIG. 9A, the first device 9100 includes: a first transceiver module 9101 etc. In some embodiments, the first transceiver module 9101 is configured to send a first signal to a second device. Optionally, the first transceiver module 9101 is used to execute at least one of the steps (for example, step S2101, step S2012, step S2015, step S2106 and/or step S2107, which are not limited here) related to "receiving and/or sending" performed by the first device in any of the above methods, which will not be repeated here.

FIG. 9B is a schematic diagram of a second device disclosed in an embodiment of the present disclosure. As shown in FIG. 9B, the second device 9200 includes: a second transceiver module 9201 etc. In some embodiments, the second transceiver module 9201 is configured to receive a first signal sent by a first device and send a second signal based on the first signal. Optionally, the second transceiver module 9201 is used to execute at least one of the steps (for example, step S2101, step S2106 and/or step S2107, which are not limited here) related to "receiving and/or sending" performed by the second device in any of the above methods, which will not be repeated here.

FIG. 9C is a schematic diagram of a third device disclosed in an embodiment of the present disclosure. As shown in FIG. 9C, the third device 9300 includes: a third transceiver module 9301 etc. In some embodiments, the third transceiver module 9301 is configured to receive a first request sent by a first device. Optionally, the third transceiver module 9301 is used to execute at least one of the steps (for example, step S2101, step S2013, step S2014 and/or step S2105, which are not limited here) related to "receiving and/or sending" performed by the third device in any of the above methods, which will not be repeated here.

FIG. 9D is a schematic diagram of a fourth device disclosed in an embodiment of the present disclosure. As shown in FIG. 9D, the fourth device 9400 includes: a fourth transceiver module 9401 etc. In some embodiments, the fourth transceiver module 9401 is configured to send security information to a first device and/or a second device. Optionally, the fourth transceiver module 9401 is used to execute at least one of the steps (for example, step S2101, step S2013 and/or step S2104, which are not limited here) related to "receiving and/or sending" performed by the fourth device in any of the above methods, which will not be repeated here.

FIG. 10A is a schematic diagram of a communication device 10100 disclosed in an embodiment of the present disclosure. The communication device 10100 may be a network device (e.g., the first device, the second device, the third device, the fourth device, or the UE, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 10100 may be used to implement the method described in the above method embodiments, and for details, reference may be made to the description in the above method embodiments.

As shown in FIG. 10A, the communication device 10100 includes one or more processors 10101. The processor 10101 may be a general-purpose processor or a dedicated processor, for example, a baseband processor or a central processing unit. The baseband processor may be used to process a communication protocol and communication data, and the central processing unit may be used to control the communication apparatus (such as a base station, a baseband chip, a terminal, a terminal chip, a DU or a CU, etc.) to execute a program and process data of the program. The processor 10101 is used to call instructions so that the communication device 10100 executes any of the above methods.

In some embodiments, the communication device 10100 further includes one or more memories 10102 for storing instructions. Optionally, all or part of the memory 10102 may be outside the communication device 10100.

In some embodiments, the communication device 10100 further includes one or more transceivers 10103. When the communication device 10100 includes one or more transceivers 10103, at least one of the communication steps such as sending and/or receiving in the above methods is performed by the transceiver 10103, and at least one of the other steps is performed by the processor 10101, but the present disclosure is not limited thereto.

In some embodiments, the transceiver may include a receiver and a transmitter, and the receiver and the transmitter may be separate or integrated. Optionally, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

Optionally, the communication device 10100 further includes one or more interface circuits 10104, which are connected to the memory 10102. The interface circuit 10104 may be used to receive signals from the memory 10102 or other apparatuses, and may be used to send signals to the memory 10102 or other apparatuses. For example, the interface circuit 10104 may read instructions stored in the memory 10102 and send the instructions to the processor 10101.

The communication device 10100 described in the above embodiments may be at least one of the first device, the second device, the third device, or the fourth device, but the scope of the communication device 10100 described in the present disclosure is not limited thereto, and the structure of the communication device 10100 may not be limited by FIG. 10A. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

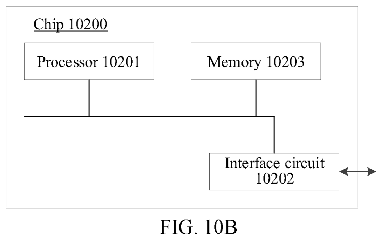

FIG. 10B is a schematic diagram of a chip 10200 disclosed in an embodiment of the present disclosure. In case where the communication device 10100 may be a chip or a chip system, reference may be made to the schematic diagram of the chip 10200 shown in FIG. 10B, but the present disclosure is not limited thereto.

The chip 10200 includes one or more processors 10201, and the chip 10200 is used to execute any of the above methods.

In some embodiments, the chip 10200 further includes one or more interface circuits 10202, which are connected to the memory 10203. The interface circuit 10202 may be used to receive signals from the memory 10203 or other apparatuses, and the interface circuit 10202 may be used to send signals to the memory 10203 or other apparatuses. For example, the interface circuit 10202 may read instructions stored in the memory 10203 and send the instructions to the processor 10201.

In some embodiments, the interface circuit 10202 executes at least one of the communication steps (for example at least one of steps S2101 to S2105, which is not limited here) such as sending and/or receiving in the above methods, and the processor 10201 executes at least one of the other steps (for example at least one of steps S2101 to S2105, which is not limited here).

In some embodiments, the terms such as "interface circuit", "interface", "transceiver pin", and "transceiver" may be exchangeable with each other.

In some embodiments, the chip 10200 further includes one or more memories 10203 for storing instructions. Optionally, all or part of the memory 10203 may be outside the chip 10200.

The present disclosure also proposes a storage medium, on which instructions are stored, and when the instructions are executed on the communication device 10100, the communication device 10100 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

The present disclosure also proposes a program product, which, when executed by the communication device 10100, enables the communication device 10100 to execute any of the above methods. Optionally, the program product is a computer program product.

The present disclosure also proposes a computer program, which, when executed on a computer, causes the computer to execute any one of the above methods.

## Claims

1. An information processing method, comprising:
sending, by a first device, a first signal to a second device, wherein the first signal is configured to stimulate the second device to send a second signal, and a security protection is performed on at least one of the first signal or the second signal using security information.

2. The method of claim 1, wherein the security information comprises at least one of:
key information, wherein the key information is configured for at least one of: a confidentiality protection or an integrity protection;
password information, wherein the password information is configured for encoding and/or decoding; or
security algorithm information, wherein the security algorithm information is configured to indicate at least one of: an algorithm used for a confidentiality protection or an algorithm used for an integrity protection.

3. The method of claim 1 or 2, wherein the first signal comprises first information for which the security protection is performed using the security information, and the method further comprises:
receiving the second signal sent by the second device, wherein the second signal comprises second information for which the security protection is performed using the security information, and the second information is determined based on the first information.

4. The method of claim 3, wherein the first signal comprises a first identifier, and the first identifier is configured to identify the second device;
the second signal is sent by the second device in a case of determining that the first identifier is the same as a second identifier stored in the second device.

5. The method of claim 3 or 4, comprising one of:
performing an integrity verification and/or a decryption on the second signal based on the key information in the security information to obtain the second information; or
decoding the second signal based on the password information in the security information to obtain the second information.

6. The method of claim 1 or 2, wherein the security protection is not performed on the first signal using the security information, and the method further comprises:
receiving the second signal sent by the second device, wherein the second signal comprises third information for which the security protection is performed using the security information.

7. The method of claim 6, comprising one of:
performing an integrity verification and/or a decryption on the second signal based on the key information in the security information to obtain the third information; or
decoding the second signal based on the password information in the security information to obtain the third information.

8. The method of any of claims 1-7, further comprising:
sending a first request to a third device, wherein the first request is configured to request the security information.

9. The method of claim 8, wherein the first request comprises at least one of:
a third identifier, configured to indicate the first device;
a first identifier, configured to indicate the second device; or
a service identifier, configured to indicate a service of the second device.

10. The method of claim 8 or 9, further comprising:
receiving a first response sent by the third device, wherein the first response comprises the security information, and the first response is sent by the third device in a case of determining that the first device is authorized to perform a secure communication with the second device.

11. The method of any of claims 1-7, further comprising one of:
pre-configuring the security information; or
obtaining the security information from a fourth device.

12. The method of any of claims 8-11, further comprising at least one of:
storing a first identifier of at least one second device and security information corresponding to the first identifier in an association manner; or
storing at least one service identifier and security information corresponding to the at least one service identifier in an association manner.

13. The method of any of claims 1-12, wherein
the first device comprises at least one of: a base station, an assistance node, an intermediate node, an integrated access and backhaul integrated (IAB), or a user equipment (UE);
and/or,
the second device comprises at least one of: an ambient Internet of Things (IoT) device;
and/or,
the third device comprises at least one of: a policy control function (PCF), a direct discovery name management function (DDNMF), a ProSe key management function (PKMF), or a first network element, wherein the first network element is configured to manage an ambient IoT device;
and/or,
the fourth device comprises at least one of: an application server or an operator device.

14. An information processing method, comprising:
receiving, by a second device, a first signal sent by a first device; and
sending a second signal based on the first signal;
wherein a security protection is performed on at least one of the first signal or the second signal using security information.

15. The method of claim 14, wherein the security information comprises at least one of:
key information, wherein the key information is configured for at least one of: a confidentiality protection or an integrity protection;
password information, wherein the password information is configured for encoding and/or decoding; or
security algorithm information, wherein the security algorithm information is configured to indicate at least one of: an algorithm used for a confidentiality protection or an algorithm used for an integrity protection.

16. The method of claim 14 or 15, wherein the first signal comprises first information for which the security protection is performed using the security information,
the method further comprises one of:
performing an integrity verification and/or a decryption on the first signal based on the key information in the security information to obtain the first information; or
decoding the first signal based on the password information in the security information to obtain the first information.

17. The method of claim 16, further comprising:
determining second information based on the first information; and
sending the second signal to the first device, wherein the second signal comprises the second information for which the security protection is performed using the security information.

18. The method of claim 17, wherein the first signal comprises a first identifier, and the first identifier is configured to identify the second device; and sending the second signal to the first device comprises:
sending the second signal to the first device based on the first identifier being the same as a second identifier stored in the second device.

19. The method of claim 14 or 15, wherein the security protection is not performed on the first signal using the security information, and the method comprises:
sending the second signal to the first device, wherein the second signal comprises third information for which the security protection is performed using the security information.

20. The method of any of claims 14-19, further comprising one of:
pre-configuring the security information; or
obtaining the security information from a fourth device.

21. The method of any of claims 14-20, wherein
the first device comprises at least one of: a base station, an assistance node, an intermediate node, an integrated access and backhaul integrated (IAB), or a user equipment (UE);
and/or,
the second device comprises at least one of: an ambient Internet of Things (IoT) device;
and/or,
the fourth device comprises at least one of: an application server or an operator device.

22. An information processing method, comprising:
receiving, by a third device, a first request sent by a first device, wherein the first request is configured to request security information, the security information is used for the first device to perform a security protection and/or a security verification on a first signal, and/or the security information is used for a second device to perform a security protection and/or a security verification on a second signal, the second signal is determined based on the first signal.

23. The method of claim 22, wherein the security information comprises at least one of:
key information, wherein the key information is configured for at least one of: a confidentiality protection or an integrity protection;
password information, wherein the password information is configured for encoding and/or decoding; or
security algorithm information, wherein the security algorithm information is configured to indicate at least one of: an algorithm used for a confidentiality protection or an algorithm used for an integrity protection.

24. The method of claim 22 or 23, wherein the first request comprises at least one of:
a third identifier, configured to indicate the first device;
a first identifier, configured to indicate the second device; or
a service identifier, configured to indicate a service of the second device.

25. The method of claim 23 or 24, further comprising:
sending a second request to a fourth device, wherein the second request is configured to request authorization of whether the first device is capable of performing a secure communication with the second device.

26. The method of claim 25, further comprising:
receiving a second response sent by the fourth device, wherein the second response comprises one of:
first indication information, configured to indicate that the first device is authorized to perform the secure communication with the second device;
second indication information, configured to indicate that the first device is not authorized to perform the secure communication with the second device.

27. The method of claim 26, further comprising:
sending a first response to the first device based on the second response comprising the first indication information, wherein the first response comprises the security information.

28. The method of claim 22 or 23, further comprising:
in response to determining that the first device is authorized to perform the secure communication with the second device, sending a first response to the first device, wherein the first response comprises the security information.

29. The method of any of claims 22-28, further comprising:
receiving the security information sent by a fourth device.

30. The method of any of claims 22-29, wherein
the first device comprises at least one of: a base station, an assistance node, an intermediate node, an integrated access and backhaul integrated (IAB), or a user equipment (UE);
and/or,
the second device comprises at least one of: an ambient Internet of Things (IoT) device;
and/or,
the third device comprises at least one of: a policy control function (PCF), a direct discovery name management function (DDNMF), a ProSe key management function (PKMF), or a first network element, wherein the first network element is configured to manage an ambient IoT device;
and/or,
the fourth device comprises at least one of: an application server or an operator device.

31. An information processing method, comprising:
providing, by a fourth device, security information to a first device and/or a second device, wherein the security information is used for the first device to perform a security protection and/or a security verification on at least one of a first signal, and/or the security information is used for the second device to perform a security protection and/or a security verification on at least one of a second signal, the second signal is determined based on the first signal.

32. The method of claim 31, wherein the security information comprises at least one of:
key information, wherein the key information is configured for at least one of: a confidentiality protection and/or an integrity protection;
password information, wherein the password information is configured for encoding and/or decoding; or
security algorithm information, wherein the security algorithm information is configured to indicate at least one of: an algorithm used for a confidentiality protection or an algorithm used for an integrity protection.

33. The method of claim 31 or 32, comprising:
receiving a second request sent by a third device, wherein the second request is configured to request authorization of whether the first device is capable of performing a secure communication with the second device.

34. The method of claim 33, further comprising:
sending a second response to the third device, wherein the second response comprises one of:
first indication information, configured to indicate that the first device is authorized to perform the secure communication with the second device;
second indication information, configured to indicate that the first device is not authorized to perform the secure communication with the second device.

35. An information processing method, comprising:
sending, by a first device, a first signal to a second device; and
sending, by the second device, a second signal to the first device based on the first signal;
wherein a security protection is performed on at least one of the first signal or the second signal using security information.

36. The method of claim 35, further comprising at least one of:
receiving, by the first device, the security information sent by a fourth device; or
receiving, by the second device, the security information sent by a fourth device.

37. The method of claim 35, further comprising:
sending, by the first device, a first request to a third device, wherein the first request is configured to request the security information;
sending, by the third device, a second request to a fourth device, wherein the second request is configured to request authorization for the first device to obtain the security information;
sending, by the fourth device, a second response to the third device, wherein the second response comprises first indication information for indicating that the first device is authorized to obtain the security information; and
sending, by the third device, a first response to a first network node, wherein the first response comprises the security information.

38. A first device, comprising:
a first transceiver module, configured to send a first signal to a second device, wherein the first signal is configured to stimulate the second device to send a second signal, and a security protection is performed on at least one of the first signal or the second signal using security information.

39. A second device, comprising:
a second transceiver module, configured to receive a first signal sent by a first device, and to send a second signal based on the first signal;
wherein a security protection is performed on at least one of the first signal or the second signal using security information.

40. A third device, comprising:
a third transceiver module, configured to receive a first request sent by a first device, wherein the first request is configured to request security information, the security information is used for the first device to perform a security protection and/or a security verification on a first signal, and/or the security information is used for a second device to perform a security protection and/or a security verification on a second signal, the second signal is determined based on the first signal.

41. A fourth device, comprising:
a fourth transceiver module, configured to send security information to a first device and/or a second device, wherein the security information is used for the first device to perform a security protection and/or a security verification on at least one of a first signal, and/or the security information is used for the second device to perform a security protection and/or a security verification on at least one of a second signal, the second signal is determined based on the first signal.

42. A first device, comprising:
one or more processors;
wherein the first device is configured to perform the information processing method of any one of claims 1 to 13.

43. A second device, comprising:
one or more processors;
wherein the second device is configured to perform the information processing method of any one of claims 14 to 21.

44. A third device, comprising:
one or more processors;
wherein the third device is configured to perform the information processing method of any one of claims 22 to 30.

45. A fourth device, comprising:
one or more processors;
wherein the fourth device is configured to perform the information processing method of any one of claims 31 to 34.

46. A communication system, comprising: a first device, a second device, a third device and a fourth device; wherein the first device is configured to perform the information processing method of any one of claims 1 to 13, the second device is configured to perform the information processing method of any one of claims 14 to 21, the third device is configured to perform the information processing method of any one of claims 22 to 30, and the fourth device is configured to perform the information processing method of any one of claims 31 to 34.

47. A storage medium having instructions stored thereon, wherein when the instructions are executed on a communication device, the communication device is caused to perform the information processing method of any one of claims 1 to 13, or claims 14 to 21, or claims 22 to 30, or claims 31 to 34, or claims 35-37.
